(19) **Europäisches Patentamt / European Patent Office / Office européen des brevets**

(11) **EP 3 856 600 B1**

(12) **FASCICULE DE BREVET EUROPEEN**

(45) Date de publication et mention
de la délivrance du brevet:
**06.11.2024  Bulletin 2024/45**

(21) Numéro de dépôt: **19783224.9**

(22) Date de dépôt: **23.09.2019**

(51) Classification Internationale des Brevets (IPC):
**B60W 50/00** *(2006.01)*   **B60W 10/06** *(2006.01)*
**B60W 10/08** *(2006.01)*   **B60W 20/12** *(2016.01)*
**B60W 10/26** *(2006.01)*

(52) Classification Coopérative des Brevets (CPC):
**B60W 20/12; B60W 10/06; B60W 10/08;**
**B60W 10/26; B60W 50/0097;** B60W 2050/0013;
B60W 2050/0025; B60W 2050/0026;
B60W 2050/0075; B60W 2510/0623;
B60W 2510/244; B60W 2552/05; B60W 2552/15;
B60W 2552/20; B60W 2552/30;       (Cont.)

(86) Numéro de dépôt international:
**PCT/EP2019/075449**

(87) Numéro de publication internationale:
**WO 2020/064586 (02.04.2020 Gazette 2020/14)**

(54) **PROCÉDÉ DE CALCUL D'UNE CONSIGNE DE GESTION DE LA CONSOMMATION EN CARBURANT ET EN COURANT ÉLECTRIQUE D'UN VÉHICULE AUTOMOBILE HYBRIDE**

VERFAHREN ZUR BERECHNUNG EINES VERWALTUNGSSOLLWERTS FÜR DEN KRAFTSTOFFVERBRAUCH UND DEN ELEKTRISCHEN STROM DURCH EIN HYBRIDFAHRZEUG

METHOD FOR CALCULATING A MANAGEMENT SETPOINT FOR THE COMSUMPTION OF FUEL AND ELECTRIC CURRENT BY A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2018  FR 1858734**

(43) Date de publication de la demande:
**04.08.2021  Bulletin 2021/31**

(73) Titulaire: **Renault s.a.s**
**92100 Boulogne Billancourt (FR)**

(72) Inventeur: **OURABAH, Abdel-Djalil**
**75013 Paris (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A2- 2 857 271     DE-A1- 102013 225 558**
**FR-A1- 3 061 470**

(52) Classification Coopérative des Brevets (CPC):
(Cont.)
B60W 2555/60; B60W 2556/10; B60W 2556/50;
B60W 2710/244; Y02T 10/40; Y02T 10/62;
Y02T 10/84

**Description**

DOMAINE TECHNIQUE AUQUEL SE RAPPORTE L'INVENTION

La présente invention concerne de manière générale les véhicules hybrides rechargeables.

Elle concerne plus particulièrement un procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant.

L'invention trouve une application particulièrement avantageuse dans les véhicules hybrides à grande autonomie électrique, c'est-à-dire dans les véhicules susceptibles de rouler à l'aide de leur seul moteur électrique sur une distance supérieure à 10 kilomètres.

ARRIERE-PLAN TECHNOLOGIQUE

Un véhicule hybride rechargeable comporte une chaîne de traction thermique conventionnelle (avec un moteur à combustion interne et un réservoir de carburant) et une chaîne de traction électrique (avec un moteur électrique et une batterie de traction pouvant notamment être mise en charge sur une prise de courant).

Un tel véhicule hybride est susceptible d'être tracté par sa seule chaîne de traction électrique, ou par sa seule chaîne de traction thermique, ou encore simultanément par ses deux chaînes de traction électrique et thermique.

Du fait de la méconnaissance du futur trajet du véhicule, la stratégie actuellement implémentée pour utiliser l'une ou l'autre des chaînes de traction consiste à systématiquement commencer par décharger la batterie de traction au début du trajet jusqu'à atteindre un niveau d'énergie minimal, puis à utiliser ensuite la chaîne de traction thermique. De cette manière, lorsque le conducteur réalise des trajets courts et qu'il a régulièrement la possibilité de recharger la batterie de traction, il utilise au maximum la chaîne de traction électrique, ce qui réduit les émissions polluantes du véhicule.

Cette stratégie ne garantit toutefois pas toujours une consommation en carburant minimale lorsque la longueur du trajet dépasse l'autonomie électrique du véhicule. C'est notamment le cas lorsque l'usager commence un trajet par une partie autoroutière et qu'il le termine par une partie en ville. En effet, l'utilisation de la chaîne de traction électrique sur autoroute, à forte puissance, est peu adaptée car les pertes électriques sont élevées, et l'utilisation de la chaîne de traction thermique est peu adaptée en ville car le rendement du moteur à combustion interne est plus faible en ville que sur autoroute.

Par ailleurs, la législation interdit parfois l'utilisation du moteur à combustion interne dans certaines zones urbaines (dites « zones à zéro émission »), l'interdiction pouvant être permanente ou temporaire, par exemple en cas de circulation alternée. On comprend alors que le conducteur n'a plus accès à ces zones à zéro émission si la batterie de traction de son véhicule est déchargée.

Afin de pallier cet inconvénient, le document US9108503 propose d'identifier sur le trajet que le conducteur souhaite effectuer la prochaine zone à zéro émission, et à assurer un fonctionnement du véhicule « tout-électrique » (c'est-à-dire n'utilisant par le moteur à combustion interne) lorsqu'il arrive sur cette zone.

Un inconvénient de cette méthode est qu'elle ne permet pas d'assurer un fonctionnement tout-électrique du véhicule sur toutes les zones à zéro émission du trajet. Ainsi, si deux zones à zéro émission sont situées à proximité l'une de l'autre, le procédé décrit ne permet pas d'assurer que le véhicule puisse rouler en mode « tout-électrique » sur la seconde zone.

Un autre inconvénient est que ce procédé n'est pas prévu pour réduire au mieux la consommation en carburant du véhicule sur l'ensemble du trajet.

Le document EP 2 857 271 A2 présente des inconvénients similaires D'autres procédés sont connus de DE 10 2013 225558 A1 et FR 3 061 470 A1.

OBJET DE L'INVENTION

Afin de remédier aux inconvénients précités de l'état de la technique, la présente invention propose un procédé de calcul d'une consigne de gestion de la consommation en carburant et en courant électrique d'un véhicule automobile hybride, qui comprend des étapes de :

> a) acquisition, au moyen d'un système de navigation, d'un trajet à effectuer,
> b) division dudit trajet en tronçons successifs,
> c) acquisition, pour chaque tronçon, d'attributs caractérisant ledit tronçon, un premier desdits attributs acquis étant relatif au caractère autorisé ou non d'utiliser le moteur à combustion interne sur ledit tronçon,
> d) pour chacun desdits tronçons et compte tenu de ses attributs, acquisition d'une relation reliant la consommation en carburant du véhicule automobile hybride sur le tronçon à sa consommation d'énergie électrique,

e) détermination d'un point optimal de consommation dans chacune des relations acquises de manière à :

- maximiser la décharge de la batterie de traction sur les tronçons pour lesquels le premier attribut indique qu'il n'est pas autorisé d'utiliser le moteur à combustion interne,
- minimiser la consommation en carburant du véhicule automobile hybride sur l'ensemble du trajet, et
- maximiser la décharge de la batterie de traction à l'issue dudit trajet, et

f) élaboration d'une consigne de gestion énergétique tout le long du trajet, en fonction des coordonnées desdits points optimaux.

Selon l'invention, le procédé est caractérisé en ce que, à l'étape e), il est prévu de déterminer les points optimaux de consommation en pénalisant les points des relation qui correspondent à une consommation non nulle de carburant sur les tronçons pour lesquels le premier attribut indique qu'il n'est pas autorisé d'utiliser le moteur à combustion interne, la détermination des points optimaux de consommation étant effectuée au moyen d'un algorithme d'optimisation heuristique consistant à minimiser une fonction qui est la somme d'une fonction de coût pour parvenir au tronçon considéré et d'une fonction heuristique évaluant le coût restant pour aller du tronçon considéré jusqu'à la fin du trajet, pour pénaliser les points des relation qui correspondent à une consommation non nulle de carburant sur les tronçons pour lesquels le premier attribut indique qu'il n'est pas autorisé d'utiliser le moteur à combustion interne, le calcul de la fonction heuristique est réalisé de façon différente sur les tronçons pour lesquels le premier attribut indique qu'il n'est pas autorisé d'utiliser le moteur à combustion interne et sur les autres tronçons.

Ainsi, grâce à l'invention, on peut s'assurer que le véhicule pourra rouler en mode « tout-électrique » sur le maximum de zones à zéro émission de son trajet, compte tenu de la capacité de sa batterie de traction et de son niveau de charge au démarrage du trajet. L'invention permet en outre de minimiser la consommation du carburant sur l'ensemble du trajet, de façon à réduire au mieux les émissions de polluants dans l'atmosphère.

D'autres caractéristiques avantageuses et non limitatives du procédé conforme à l'invention sont les suivantes :

- à l'étape f), la consigne de gestion énergétique comporte une commande d'inhibition du démarrage du moteur à combustion interne sur les tronçons pour lesquels le premier attribut indique qu'il n'est pas autorisé d'utiliser le moteur à combustion interne ;
- le calcul de la fonction heuristique est réalisé en utilisant une expression mathématique à laquelle est appliqué un coefficient multiplicateur qui est strictement supérieur à 1 sur les tronçons pour lesquels le premier attribut indique qu'il n'est pas autorisé d'utiliser le moteur à combustion interne et qui est égale à 1 sur les autres tronçons ;
- à l'étape d), chaque relation est acquise en sélectionnant, parmi une pluralité de relations prédéterminées reliant des valeurs de consommation en carburant à des valeurs de consommation d'énergie électrique, la relation prédéterminée qui est la meilleure approximation de la relation reliant la consommation en carburant du véhicule automobile hybride sur le tronçon à sa consommation d'énergie électrique compte tenu des attributs caractérisant ledit tronçon ;
- les relations prédéterminées sont des courbes ou des cartographies reliant des valeurs de consommation de carburant du moteur à combustion interne à des valeurs de charge ou de décharge de la batterie de traction ;
- une mémoire mémorisant les relations prédéterminées ainsi qu'un tableau associant à chaque valeur d'attribut une probabilité que le tronçon soit associée à l'une ou l'autre des relations prédéterminées, à l'étape d), il est prévu pour chaque tronçon de déterminer grâce audit tableau, compte tenu des valeurs des attributs associés à ce tronçon, la somme des probabilités que le tronçon appartienne à l'une ou l'autre des relations prédéterminées, et de sélectionner la relation présentant la somme de probabilité la plus élevée ;
- à l'étape b), chaque tronçon est défini comme étant une portion de longueur maximale du trajet qui comporte au moins deux attributs invariables sur toute sa longueur, l'un des deux attributs étant formé par le premier attribut.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un tableau illustrant les valeurs d'attributs caractérisant des tronçons d'un trajet qu'un véhicule doit effectuer ;
- la figure 2 est un tableau illustrant les paramètres de courbes de référence caractérisant les tronçons du trajet à effectuer ;
- la figure 3 est un graphique illustrant la répartition de courbes de consommation spécifique acquises lors de roulages de test ;
- la figure 4 est un graphique illustrant plusieurs courbes de référence ;
- la figure 5 est un tableau associant à chaque valeur d'attribut affecté à un tronçon, une probabilité que ce tronçon soit associé à l'une ou l'autre des courbes de référence de la figure 4 ;
- la figure 6 est un graphique illustrant les corrections à apporter à une courbe de référence, compte tenu de la consommation électriques d'appareils auxiliaires du véhicule ;
- la figure 7 est un graphique illustrant les corrections à apporter à une courbe de référence, compte tenu de la pente du tronçon du trajet correspondant ; et
- la figure 8 est un graphique illustrant différents points pour chaque courbe de référence associé à chaque tronçon et d'une courbe passant par les points optimaux de ces courbes de référence.

Classiquement, un véhicule automobile comporte un châssis qui supporte notamment un groupe motopropulseur, des éléments de carrosserie et des éléments d'habitacle.

Dans un véhicule hybride rechargeable, le groupe motopropulseur comporte une chaîne de traction thermique et une chaîne de traction électrique.

La chaîne de traction thermique comporte notamment un réservoir de carburant et un moteur à combustion interne alimenté en carburant par le réservoir.

La chaîne de traction électrique comporte quant à elle une batterie de traction et un ou plusieurs moteur(s) électrique(s) alimentés en courant électrique par la batterie de traction.

Le véhicule automobile comporte ici aussi une prise de courant permettant de mettre en charge localement la batterie de traction, par exemple sur le réseau électrique d'une habitation ou sur tout autre réseau électrique.

Le véhicule automobile comporte également des appareils auxiliaires, qui sont ici définis comme des appareils électriques alimentés en courant par la batterie de traction.

Parmi ces appareils auxiliaires, on peut citer le moteur de climatisation, les moteurs des vitres électriques, ou encore le système de géolocalisation et de navigation.

Ce système de géolocalisation et de navigation comporte classiquement une antenne permettant de recevoir des signaux relatifs à la position géolocalisée du véhicule automobile, une mémoire permettant de stocker une cartographie d'un pays ou d'une région, et un écran permettant d'illustrer la position du véhicule sur cette cartographie.

Ici, on considérera le cas où cet écran est tactile pour permettre au conducteur d'y saisir des informations. Il pourrait bien entendu en être autrement.

Enfin, le système de géolocalisation et de navigation comporte un contrôleur permettant de calculer un trajet à effectuer compte tenu des informations saisies par le conducteur, de la cartographie stockée dans sa mémoire, et de la position du véhicule automobile.

Le véhicule automobile 1 comprend par ailleurs une unité électronique de commande (ou ECU pour "Electronic Control Unit"), appelée ici calculateur, permettant notamment de commander les deux chaînes de traction précitées (notamment les puissances développées par le moteur électrique et par le moteur à combustion interne).

Dans le contexte de la présente invention, ce calculateur est connecté au contrôleur du système de géolocalisation et de navigation, de manière que ces deux éléments peuvent se communiquer des informations.

Ici, ils sont connectés ensemble par le réseau principal de communication inter-organes du véhicule (typiquement par le bus CAN).

Le calculateur comprend un processeur et une unité de mémorisation (appelée ci-après mémoire).

Cette mémoire enregistre des données utilisées dans le cadre du procédé décrit ci-dessous.

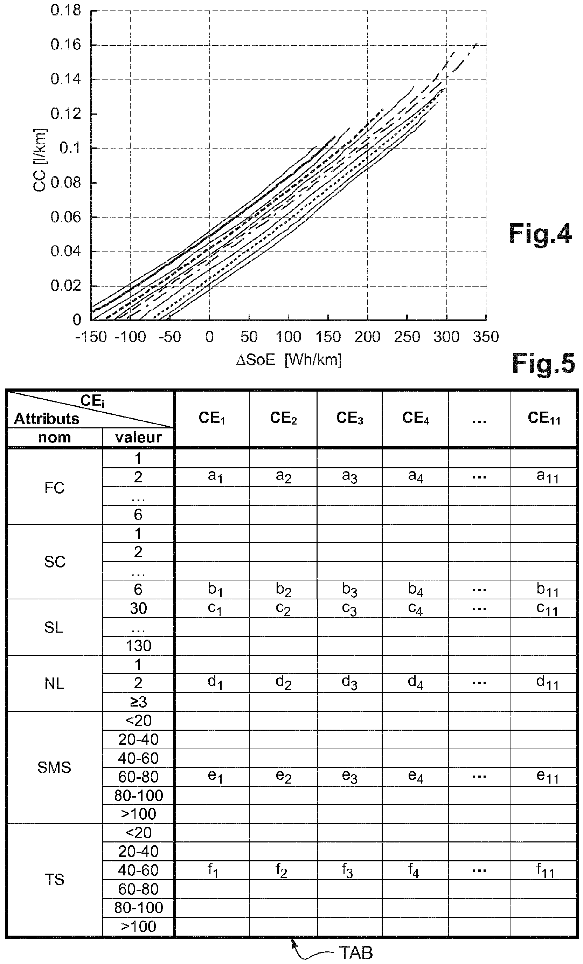

Elle enregistre notamment un tableau du type de celui illustré sur la figure 5 (qui sera détaillé dans la suite de cet exposé).

Elle enregistre également une application informatique, constituée de programmes d'ordinateur comprenant des instructions dont l'exécution par le processeur permet la mise en oeuvre par le calculateur du procédé décrit ci-après.

A titre liminaire, on définira ici plusieurs notions utilisées dans l'exposé du procédé décrit ci-après.

On pourra ainsi définir le terme « trajet » comme étant un chemin que le véhicule automobile doit emprunter depuis une station de départ pour se rendre à une station d'arrivée.

Cette station d'arrivée, but du trajet, sera considérée comme étant équipée d'une station de charge permettant de recharger la batterie de traction via la prise de courant équipant le véhicule.

Chaque trajet pourra être découpé en « segments adjacents » ou en « tronçons adjacents ».

La notion de segments sera celle nativement utilisée par le contrôleur équipant le système de géolocalisation et de navigation.

En pratique, chaque segment correspond à une partie du trajet qui s'étend entre deux intersections de routes. Pour définir le trajet le plus court ou le plus rapide, le contrôleur va donc déterminer par quels segments de routes le trajet doit passer.

La notion de tronçons est différente. Elle sera bien détaillée dans la suite de cet exposé. Pour simplifier, chaque tronçon du trajet correspond à une partie du trajet sur laquelle les caractéristiques de la route n'évoluent pas sensiblement. A titre d'exemple, le trajet pourrait ainsi être découpé en plusieurs tronçons sur chacun desquels la vitesse maximale autorisée est constante.

Ces tronçons sont caractérisés par des paramètres appelés ici « attributs ». Des exemples d'attributs permettant de caractériser chaque tronçon sont les suivants.

Un premier attribut sera la « catégorie de route FC ». Les contrôleurs équipant les systèmes de géolocalisation et de navigation utilisent généralement ce genre de catégories pour distinguer les différents types de routes. Ici, cette catégorie pourra prendre une valeur entière comprise entre 1 et 6. Un attribut égal à 1 pourra correspondre à une autoroute, un attribut égal à 2 pourra correspondre à une route nationale, ...

Un second attribut sera la « pente RG » du tronçon, exprimée en degrés ou en pourcentage.

Les troisième, quatrième, cinquième et sixième attributs seront relatifs à des vitesses caractéristiques des véhicules empruntant le tronçon.

Le troisième attribut sera la « catégorie de vitesse SC » du tronçon. Les contrôleurs équipant les systèmes de géolocalisation et de navigation utilisent généralement aussi ce genre de catégories pour distinguer les différents types de routes. Ici, cette catégorie pourra prendre une valeur entière comprise entre 1 et 6. Un attribut égal à 1 pourra correspondre à une route à grande vitesse (supérieure à 120 km/h), un attribut égal à 2 pourra correspondre à une route à vitesse élevée (comprise entre 100 et 120 km/h), ...

Le quatrième attribut sera la « vitesse maximum autorisée SL » sur le tronçon.

Le cinquième attribut sera la « vitesse moyenne SMS » constatée sur le tronçon (dont la valeur est issue d'une mesure statistique effectuée sur chaque route).

Le sixième attribut sera la « vitesse instantanée TS » constatée sur le tronçon (dont la valeur est issue d'un système d'information sur l'état du trafic en temps réel).

Le septième attribut sera la « longueur LL » du tronçon.

Le huitième attribut sera le « rayon de courbure moyen LC » du tronçon.

Le neuvième attribut sera le « nombre de voies NL » du tronçon dans le sens de circulation emprunté par le véhicule.

Le dixième attribut sera relatif au caractère autorisé ou non d'utiliser le moteur à combustion interne sur le tronçon considéré. Ce dixième attribut sera appelé « zéro-émission ZE ». Il s'agira ici d'un booléen égal à 0 s'il est autorisé d'utiliser le moteur à combustion interne sur le tronçon considéré, et égal à 1 sinon.

Dans l'exposé qui suit, on utilisera ces dix attributs pour caractériser chaque tronçon du trajet.

En variante, on pourra caractériser chaque tronçon du trajet par un nombre restreint ou plus important d'attributs, l'utilisation du dixième attribut étant toutefois incontournable.

On définira par ailleurs l'état d'énergie SOE (de l'anglais « state of energy ») de la batterie de traction comme étant un paramètre permettant de caractériser l'énergie restante dans cette batterie de traction. En variante, on pourra utiliser un autre paramètre tel que l'état de charge SOC de la batterie (de l'anglais « state of charge ») ou tout autre paramètre du même type (résistance interne de la batterie, tension aux bornes de la batterie, ...).

La charge ou la décharge ∆SOE de la batterie de traction sera alors considérée égale à la différence entre deux états d'énergie considérés à deux moments distincts.

On définit alors la « courbe de consommation spécifique » du véhicule sur un tronçon considéré comme étant une courbe qui associe à chaque valeur de consommation en carburant CC du véhicule une valeur de charge ou décharge ∆SOE de la batterie de traction. En effet, sur un tronçon déterminé, il est possible d'estimer quelle sera la consommation en carburant CC du véhicule (en litre par kilomètre parcouru) et la charge ou décharge ∆SOE de la batterie de traction en (Watt-heure par kilomètre). Ces deux valeurs seront liées par une courbe, puisqu'elles varieront selon que l'on utilise plutôt la chaîne de traction électrique ou plutôt la chaîne de traction thermique pour faire avancer le véhicule.

Puisqu'il existe une infinité de situations différentes (pente, vitesse...), il existe aussi un infinité de courbes de consommation spécifique. On définit alors les « courbes de référence » comme étant des courbes de consommation spécifique particulières, dont on connaîtra bien les caractéristiques et qui permettront d'approximer chaque courbe de consommation spécifique. Autrement formulé, comme cela apparaîtra plus clairement dans la suite de cet exposé, on associera à chaque tronçon de trajet non pas une courbe de consommation spécifique, mais plutôt une courbe de référence (celle qui constituera la meilleure approximation de la courbe de consommation spécifique).

Le procédé, qui est mis en oeuvre conjointement par le contrôleur du système de géolocalisation et de navigation et par le calculateur du véhicule, est un procédé de calcul d'une consigne de gestion de la consommation en carburant et en courant électrique du véhicule.

Ce procédé consiste plus précisément à déterminer comment, sur un trajet prédéfini, il faudra utiliser la chaîne de traction électrique et la chaîne de traction thermique de manière à :

- réduire au mieux la consommation en carburant du véhicule ainsi que ses émissions polluantes, et à

- assurer un mode de fonctionnement « tout-électrique » du véhicule (c'est-à-dire n'utilisant par le moteur à combustion interne) sur les tronçons pour lesquels l'attribut « zéro-émission ZE » est égal à 1.

Pour cela, le procédé comprend les six étapes principales suivantes :

- acquisition d'un trajet à effectuer,
- division dudit trajet en tronçons $T_i$ adjacents successifs,
- acquisition, pour chaque tronçon $T_i$, d'attributs FC, SC, SL, TS, RG, LL NL, SMS caractérisant ce tronçon T,,
- détermination, pour chacun des tronçons $T_i$, compte tenu des attributs FC, SC, SL, TS, RG, LL NL, SMS de ce tronçon $T_i$, d'une relation (appelée ici courbe de référence $CE_j$) reliant chaque valeur de consommation en carburant CC du véhicule automobile hybride sur le tronçon à une valeur de charge ou décharge ∆SOE de la batterie de traction,
- détermination d'un point optimal $P_i$ de chaque courbe de référence $CE_j$ permettant de minimiser la consommation en carburant du véhicule automobile hybride sur l'ensemble du trajet et d'obtenir une décharge complète de la batterie de traction à l'issue dudit trajet, tout en assurant un mode de fonctionnement « tout-électrique » sur les tronçons pour lesquels l'attribut « zéro-émission ZE » est égal à 1, et
- élaboration d'une consigne de gestion énergétique en fonction des coordonnées desdits points optimaux $P_i$.

Ces six étapes successives sont détaillées dans la suite de cet exposé.
La première étape consiste à acquérir le trajet que le véhicule automobile doit effectuer.
Cette étape pourra être opérée par le contrôleur embarqué dans le système de géolocalisation et de navigation.
Cette étape est alors mise en oeuvre de manière classique.
Ainsi, lorsque le conducteur utilise l'écran tactile du système de géolocalisation et de navigation pour définir une station d'arrivée, le contrôleur de ce système calcule le trajet à effectuer, en fonction notamment des paramètres de routage sélectionnés par le conducteur (trajet le plus rapide, trajet le plus court, ...).
A ce stade, on pourra noter que le procédé devra être réinitialisé dès lors que le véhicule emprunte un trajet différent de celui défini par le système de géolocalisation et de navigation.
En variante, cette première étape pourra être réalisée autrement.
Ainsi, il sera possible de s'affranchir de la saisie par le conducteur de la station d'arrivée sur l'écran tactile. Pour cela, le contrôleur pourra détecter les habitudes du conducteur et en déduire automatiquement la station d'arrivée.
Par exemple, lorsque le conducteur emprunte chaque jour de la semaine le même trajet pour aller travailler, ce trajet peut être automatiquement acquis sans que le conducteur n'ait à saisir une quelconque information sur l'écran tactile du système de géolocalisation et de navigation.
A l'issue de cette première étape, le contrôleur embarqué dans le système de géolocalisation et de navigation connaît le trajet du véhicule, qui est alors composé d'une pluralité de segments adjacents, dont on rappelle qu'ils s'étendent chacun entre deux intersections de route.
La seconde étape consiste à diviser le trajet en tronçons $T_i$.
L'intérêt de re-diviser le trajet non plus en segments mais en tronçons est tout d'abord de réduire le nombre de subdivisions du trajet. En effet, il arrive souvent que les attributs de deux segments successifs soient identiques. Si on traitait séparément ces deux segments successifs, on multiplierait inutilement la durée des calculs. En rassemblant les segments identiques au sein d'un même tronçon, on va pouvoir réduire la durée des calculs.
Un autre intérêt est que les caractéristiques de la route sur un même segment peuvent varier sensiblement (une partie du segment peut correspondre à une route de pente nulle et une autre partie de ce segment peut correspondre à une route de pente importante). Ici, on souhaite diviser le trajet en tronçons sur chacun desquels les caractéristiques de la route restent homogènes.
Chaque tronçon $T_i$ sera ici défini comme étant une portion du trajet qui comporte au moins un attribut invariable sur toute sa longueur.
Cet attribut pourra être constitué par la pente RG et/ou par la catégorie de vitesse SC et/ou par la catégorie de route FC.
Chaque tronçon $T_i$ sera par ailleurs défini de façon à ce que l'attribut « zéro-émission ZE » soit invariable sur toute sa longueur.
Ici, cette seconde étape sera mise en oeuvre par le contrôleur embarqué dans le système de géolocalisation et de navigation. Il découpera à cet effet le trajet en tronçons $T_i$ de longueurs maximum sur lesquels les quatre attributs précités (RG, SC, FC, zéro-émission ZE) sont constants.
A l'issue de cette seconde étape, le contrôleur a ainsi défini N tronçons (l'indice i variant donc de 1 à N).
La troisième étape consiste à acquérir les attributs de chaque tronçon $T_i$.
Lorsque l'un des attributs sera variable sur le tronçon considéré, c'est la valeur moyenne de cet attribut sur l'ensemble du tronçon qui sera considérée.
En pratique, cette troisième étape est réalisée de la manière suivante.

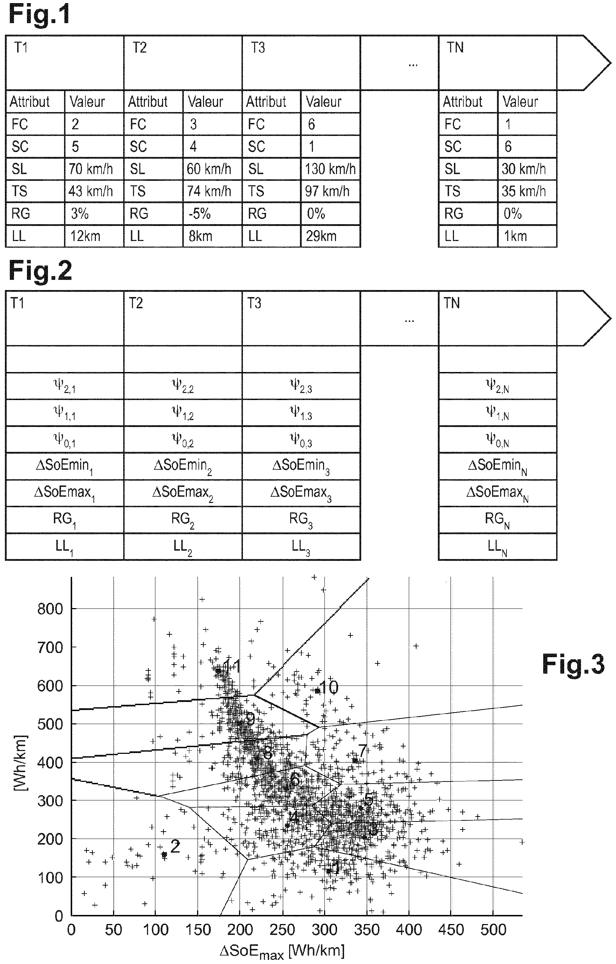

Tout d'abord, le contrôleur embarqué dans le système de géolocalisation et de navigation informe le calculateur qu'un nouveau trajet a été calculé. Le calculateur demande alors l'envoi des attributs de chaque tronçon, sous la forme par exemple d'un tableau du type de celui illustré sur la figure 1.

Le contrôleur acquiert alors les attributs de chaque tronçon de la manière suivante.

Il en calcule une partie, notamment la longueur LL du tronçon.

Il en lit une autre partie dans la mémoire du système de géolocalisation et de navigation, notamment la catégorie de route FC, la pente RG, la catégorie de vitesse SC, la vitesse maximum autorisée SL, la vitesse moyenne SMS, le rayon de courbure moyen LC, et le nombre de voies NL.

Il se fait communiquer une dernière partie de ces attributs par un autre appareil, notamment la vitesse instantanée TS que lui communique le système d'information sur l'état du trafic en temps réel.

L'attribut « zéro-émission ZE » peut quant à lui aussi bien être lu dans la mémoire du système de géolocalisation et de navigation (pour les zones où la loi interdit en permanence l'utilisation du moteur à combustion interne), que communiqué par un autre appareil (par exemple communiqué par une station radio adaptée à émettre des signaux radio indiquant les zones où la loi interdit à l'instant courant l'utilisation du moteur à combustion interne). On peut également prévoir que l'usager choisisse lui-même des zones du trajet dans lesquels il ne souhaite pas autoriser l'utilisation du moteur à combustion interne.

Le contrôleur transmet ensuite l'ensemble de ces informations au calculateur principal du véhicule, via le bus CAN.

L'avantage d'utiliser le contrôleur embarqué dans le système de géolocalisation et de navigation plutôt que le calculateur principal du véhicule pour opérer les trois premières étapes est de réduire le nombre d'informations à transmettre au calculateur par le bus CAN. En effet, en fusionnant les segments adjacents du trajet qui présentent les mêmes attributs, le volume des données transmises est réduit, ce qui accélère la transmission des données par le bus CAN.

Dès réception des informations, le calculateur met en oeuvre les étapes suivantes.

La quatrième étape consiste alors, pour chacun des tronçons $T_i$, à déterminer parmi les courbes de référence $CE_j$ enregistrées dans la mémoire du calculateur celle qui permettra d'estimer au mieux la consommation énergétique (en carburant et en courant) du véhicule sur le tronçon $T_i$ considéré.

Cette étape permet alors de passer d'une caractérisation de chaque tronçon par des attributs, à une caractérisation par un coût énergétique.

Au cours de cette quatrième étape, le calculateur va utiliser le tableau TAB illustré sur la figure 5, qui est enregistré dans sa mémoire.

Comme le montre cette figure 5, ce tableau TAB présente des lignes qui correspondent chacune à une valeur (ou à un intervalle de valeurs) d'un des attributs. Il présente des colonnes correspondant chacune à l'une des courbes de référence $CE_j$. Dans l'exemple illustré, on considérera que la mémoire du calculateur stocke M courbes de référence $CE_j$, avec M ici égal à onze.

Sur la figure 5, les cases du tableau TAB sont laissées vides puisque les valeurs qu'elles comporteront dépendront des caractéristiques du véhicule.

En pratique, ce tableau TAB sera mémorisé dans la mémoire du calculateur avec des valeurs dans chacune de ces cases.

Ces valeurs seront des valeurs de probabilité (comprises entre 0 et 1) correspondant à la probabilité que chaque valeur d'attribut corresponde à l'une ou l'autre des courbes de référence $CE_j$.

A titre d'exemple, si la catégorie de route FC d'un tronçon $T_i$ présente une valeur égale à 2, on pourra lire dans le tableau que la probabilité que ce tronçon soit bien caractérisé en termes de coût énergétique par la courbe de référence CE1 sera égale à $a_1$, que la probabilité que ce tronçon soit bien caractérisé en termes de coût énergétique par la courbe de référence CE2 sera égale à $a_2$, ...

On notera pour la suite que les valeurs des attributs « pentes RG », « longueur LL » et « zéro-émission ZE » n'ont pas été, à dessein, utilisées dans ce tableau TAB.

A ce stade, le calculateur peut alors relever chaque valeur de probabilité correspondant à la valeur de chaque attribut du tronçon $T_i$ considéré.

Sur l'exemple illustré, où on considère que l'attribut FC est égal à 2, que l'attribut SC est égal à 6, que l'attribut SL est égal à 30, que l'attribut NL est égal à 2, que l'attribut SMS est compris entre 60 et 80 et que l'attribut TS est compris entre 40 et 60, le calculateur relève les valeurs notées $a_1$ à $a_{11}$, $b_1$ à $b_{11}$, $c_1$ à $c_{11}$, $d_1$ à $d_{11}$, $e_1$ à $e_{11}$, et $f_1$ à $f_{11}$.

Le calculateur fait ensuite la somme des probabilités que le tronçon $T_i$ considéré soit bien caractérisé en termes de coût énergétique par chacune des onze courbes de référence $CE_j$.

Sur l'exemple illustré, le calculateur somme à cet effet les valeurs notées $a_1$ à $f_1$, puis a2 à f2, ...

Enfin, le calculateur détermine laquelle des onze sommes donne le résultat le plus élevé.

Alors, il considère que la courbe de référence $CE_j$ à laquelle est associée cette somme de probabilité élevée est celle qui caractérise le mieux le tronçon $T_i$ en terme de coût énergétique.

Le calculateur peut alors acquérir dans sa mémoire les valeurs des paramètres caractérisant cette courbe de

référence CE$_j$.

A ce stade de l'exposé, on peut s'intéresser plus précisément à la manière selon laquelle ces courbes de référence sont obtenues et modélisées.

Pour chaque modèle de véhicule (ou pour chaque modèle de moteurs, ou pour chaque ensemble de modèles de voitures, ou pour chaque ensemble de modèle de moteurs), il est nécessaire de réaliser un grand nombre de roulages tests (ou de simulation de roulages tests) sur différents tronçons de route géolocalisés.

Ces roulages tests permettent de déterminer la consommation en carburant et en courant électrique du véhicule sur différents tronçons dont les attributs sont connus. Pour cela, on fait évoluer le véhicule plusieurs fois sur chaque tronçon en augmentant à chaque fois la part de la traction développée par le moteur électrique.

Il est alors possible de générer une courbe de consommation spécifique CCS pour chaque tronçon. Ces courbes de consommation spécifique sont du type des courbes illustrées sur la figure 4.

On peut observer sur chacune de ces courbes que plus on utilise de l'énergie électrique (soit un ΔSoE < 0) plus la consommation de carburant baisse jusqu'à atteindre 0 lors d'un roulage en utilisant exclusivement la chaîne de traction électrique. A l'inverse plus on cherche à recharger la batterie via le moteur thermique (ΔSoE > 0) plus la consommation de carburant augmente. Enfin, on rappellera que chaque courbe de consommation spécifique CCS décrit la consommation énergétique moyenne du véhicule pour la situation d'un roulage sur route horizontale (pente nulle), sans consommation électrique des appareils auxiliaires.

Ces roulages tests permettent de trouver autant de courbes de consommation spécifique CCS qu'il y a de tronçons testés.

Chaque courbe de consommation spécifique CCS peut être modélisée par un polynôme de second ordre pour lequel les variations de charge et décharge ΔSOE de la batterie de traction sont bornées entre un seuil minimal ΔSOE$_{min}$ et un seuil maximal ΔSOE$_{max}$, ce que l'on peut écrire :

$$\begin{cases} m_{FC} = \Psi_2 . \Delta SoE^2 + \Psi_1 . \Delta SoE + \Psi_0 \\ \Delta SoE \in [\Delta SoEmin \quad \Delta SoEmax] \end{cases}$$

avec $\Psi_0$, $\Psi_1$, $\Psi_2$ les coefficients du polynôme.

Comme le montrent les courbes de la figure 4, pour simplifier cette modélisation, on peut faire l'estimation que les deux coefficients $\Psi_1$, $\Psi_2$ sont identiques d'une courbe à l'autre. On peut également observer que le seuil minimal ΔSOE$_{min}$ dépend des trois coefficients du polynôme. Ainsi, seuls varient le coefficient $\Psi_0$ et le seuil maximal ΔSOE$_{max}$. Ce sont donc ces deux valeurs qui permettent de caractériser chaque courbe de consommation spécifique CCS.

La figure 3 illustre alors des points dont les coordonnées correspondent à ces deux variables $\Psi_0$ et ΔSOE$_{max}$. Elle montre la répartition des courbes de consommation spécifique CCS obtenues lors des roulages tests effectués. Ici, on considère que ces points sont répartis dans onze zones distinctes. Chaque zone est alors définie par son barycentre.

Ainsi, comme cela a été exposé supra, dans le procédé, on n'acquiert pas la courbe de consommation spécifique qui correspondrait exactement au tronçon considéré, mais on considère plutôt une des onze courbes de référence dont les variables $\Psi_0$ et ΔSOE$_{max}$ correspondent au barycentre de l'une de ces onze zones.

A ce stade du procédé, chaque tronçon T$_i$ est alors défini comme le montre la figure 2 par les paramètres $\Psi_0$, $\Psi_1$, $\Psi_2$, ΔSOE$_{min}$, ΔSOE$_{max}$ précités, ainsi que par la longueur LL$_i$ de chaque tronçon T$_i$, par sa pente RG$_i$, et par l'attribut « zéro-émission ZE ».

Comme cela a été expliqué supra, la courbe énergétique CE$_i$ sélectionnée ne tient compte ni de la pente du tronçon T$_i$, ni de la consommation en courant électrique des appareils auxiliaires (moteur de climatisation, ...), ni du caractère autorisé ou non de l'utilisation du moteur à combustion interne sur le tronçon considéré.

Afin de tenir compte de la pente de chaque tronçon T$_i$, il est prévu une étape de correction de chaque courbe de référence CE$_i$ en fonction de la pente RG$_i$.

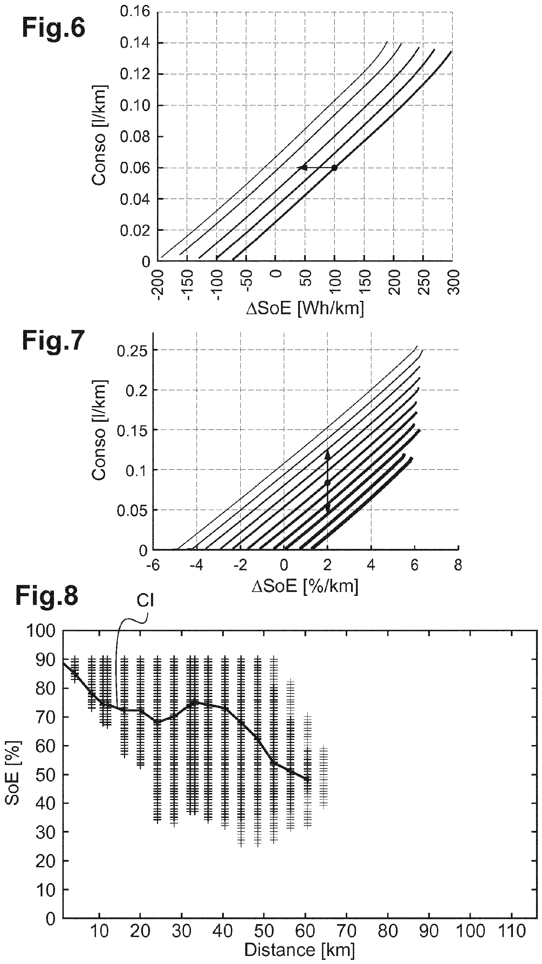

Comme le montre bien la figure 7, cette étape de correction consiste simplement à décaler la courbe de référence CE$_i$ associée au tronçon T$_i$ vers le haut ou vers le bas (c'est-à-dire à charge ou décharge ΔSOE constante), d'une valeur fonction de la pente RG$_i$.

On comprend en effet que lorsque le tronçon de route considéré monte, la consommation en carburant va être plus élevée que celle prévue initialement. A contrario, lorsque le tronçon de route considéré descend, la consommation en carburant va être moins élevée que celle prévue initialement.

En outre, lors des phases de freinage, il sera possible de récupérer davantage d'énergie électrique en descente qu'en montée.

En pratique, l'étape de correction consistera à corriger le paramètre $\Psi_0$ selon la formule suivante :

$$\Psi_0{}' = \Psi_0 + K.RGi \, ,$$

avec K un coefficient dans la valeur dépend du modèle de véhicule considéré et de ses caractéristiques (à titre d'exemple, on pourra ici considérer K = 0.01327 $l.km^{-1}$).

Afin de tenir compte de la consommation en courant électrique des appareils auxiliaires, il est prévu une seconde étape de correction de chaque courbe de référence $CE_i$ en fonction de la puissance électrique $P_{aux}$ consommée par ces appareils auxiliaires.

On notera ici que la valeur de puissance électrique $P_{aux}$ considérée est la valeur qui peut être mesurée au moment des calculs. Dans ce procédé, on fait donc l'hypothèse que la puissance électrique consommée restera sensiblement constante lors du trajet. Si jamais le calculateur détectait une grosse variation de cette puissance électrique sur une durée importante (par exemple parce que la climatisation est mise en route), il pourrait être programmé pour recommencer le procédé à cette étape afin de tenir compte de la nouvelle valeur de puissance électrique $P_{aux}$.

Plus précisément, le procédé pourrait être réinitialisé à cette seconde étape de correction si l'écart entre la puissance électrique considérée dans les calculs et celle mesurée devait rester supérieur à un seuil (par exemple de 10%) sur une durée supérieure à un seuil (par exemple 5 minutes).

Comme le montre bien la figure 6, la seconde étape de correction consiste simplement à décaler la courbe de référence $CE_i$ associée au tronçon $T_i$ vers la gauche (c'est-à-dire à consommation en carburant constante), d'une valeur fonction de la puissance électrique $P_{aux}$.

On comprend en effet que lorsque les appareils électriques sont utilisés, la charge de la batterie va être plus lente que prévue et la décharge de cette batterie va être plus rapide que prévue.

En pratique, l'étape de correction consistera à décaler la courbe de référence $CE_j$ d'une valeur $E_{AUX}$ calculée à partir de la formule suivante :

$$E_{AUX} = \frac{P_{AUX}}{\bar{v}}$$

où $\bar{v}$ représente la vitesse moyenne sur le tronçon (en km/h). Cette valeur peut être fournie directement par le système de géolocalisation et de navigation, en estimant qu'elle sera égale à la valeur de la vitesse du trafic ou à la vitesse moyenne statistique ou à la vitesse maximale autorisée.

La cinquième étape du procédé consiste ensuite à déterminer, sur chaque courbe de référence $CE_j$, le point optimal $P_i$ qui permettra de minimiser la consommation en carburant du véhicule automobile hybride sur l'ensemble du trajet et d'obtenir une décharge complète de la batterie de traction à l'issue dudit trajet, tout en respectant la contrainte définie par l'attribut « zéro-émission ZE ».

Cette étape pourrait être effectuée au moyen d'un algorithme quelconque (programmation quadratique, programmation dynamique...).

Elle est ici effectuée au moyen d'un algorithme d'optimisation heuristique, par exemple du type A*. Il s'agit d'un algorithme connu dans l'état de la technique et qui ne sera donc pas ici décrit en détail. On pourra toutefois expliquer brièvement son fonctionnement.

Pour cela, on se référera à la figure 8.

On y observe que pour chaque tronçon est tracée une série de points de passage par des états d'énergie SOE parallèle à l'axe des ordonnées, à une abscisse égale (en kilomètres) à la distance entre la station de départ et le point final du tronçon. Chaque point de cette ligne correspond à un état d'énergie SOE atteignable déduit à partir de la courbe de référence $CE_j$ associée à ce tronçon. L'espace des états d'énergie SOE est discrétisée en un nombre fini de points.

L'ordonnée de chaque point est alors égal à l'état d'énergie SOE de la batterie de traction qu'il resterait à l'issue du tronçon si le véhicule était piloté selon le point correspondant de la courbe de référence $CE_j$, compte tenu de la charge ou décharge appliquée à la batterie de traction.

Chaque point constitue donc un noeud $n_{i,x}$ (l'indice i correspondant au tronçon $T_i$ considéré et l'indice x correspondant à l'état d'énergie SOE de la batterie de traction à l'issue du tronçon $T_i$ considéré).

L'objectif de l'algorithme A* est alors de trouver le chemin CI qui permettra de minimiser la consommation en carburant du véhicule tout en respectant les zones zéro-émission du trajet.

Le choix de l'ordre d'exploration des noeuds $n_{i,x}$ est déterminé en tentant de minimiser une fonction f qui est la somme d'une fonction de coût g et d'une fonction heuristique h, comme le montre la formule suivante :

$$f(n_{i,x}) = g(n_{i,x}) + h(n_{i,x})$$

où la fonction de coût g représente la quantité de carburant nécessaire pour arriver au noeud n depuis le noeud initial (début du trajet) sur la meilleur trajectoire disponible en fonction des choix de la charge ou décharge $\Delta SOE$ à appliquer à la batterie sur les tronçons précédents, et

où la fonction heuristique h représente une estimation optimiste de la quantité de carburant restante à consommer avec une charge ou décharge ΔSOE qui pourrait être appliquée à la batterie de traction pour passer du noeud n au noeud final en considérant le cas d'une décharge linéaire de la batterie de traction depuis le noeud n.

Ces deux expressions peuvent s'exprimer en fonction de la position du tronçon considéré le long du trajet (exprimé ici par une abscisse curviligne $d_i$) et du niveau d'énergie $SOE_x$ considéré de la batterie de traction à l'issue du tronçon $T_i$.

La fonction de coût g peut ainsi s'exprimer, pour représenter le coût d'une transition d'un noeud $n_{i,x}$ (défini par une abscisse curviligne $d_i$ et par un niveau d'énergie $SOE_x$) à un noeud $n_{i+1,y}$ (défini par une abscisse curviligne $d_{i+1}$ et par un niveau d'énergie $SOE_y$) par l'expression :

$$g\left(n_{i,x}, n_{i+1,y}\right) = (d_{i+1} - d_i) * \left[\psi_{i,2}\left(\frac{SOE_y - SOE_x}{d_{i+1} - d_i}\right)^2 + \psi_{i,1}\left(\frac{SOE_y - SOE_x}{d_{i+1} - d_i}\right) + \psi_{i,0}\right]$$

La fonction heuristique h du noeud $n_{i,x}$ peut quant à elle s'exprimer par l'expression :

$$h\left(n_{i,x}\right) = \sum_{j=i}^{N} \alpha_i^{ZE} * \left(d_{j+1} - d_j\right) * \left[\psi_{j,2}\left(\frac{SOE_c - SOE_x}{d_N - d_i}\right)^2 + \psi_{j,1}\left(\frac{SOE_c - SOE_x}{d_N - d_i}\right) + \psi_{j,0}\right]$$

où la station d'arrivée est située au noeud $n_N$ (défini par une abscisse curviligne $d_N$ et par un niveau d'énergie $SOE_c$), et où le coefficient multiplicateur $\alpha_i^{ZE}$ sera défini plus tard.

La fonction f permet à l'algorithme d'explorer à chaque pas de calcul la trajectoire qui à la fois minimise le coût pour arriver au noeud courant mais aussi minimise le coût restant depuis ce noeud jusqu'à la fin du trajet.

Ainsi, l'utilisation de la fonction f incite cet algorithme à explorer les trajectoires les plus proches de la trajectoire optimale, ce qui limite l'exploration de trajectoires sous-optimales et qui permet d'obtenir de bons résultats en un minimum de temps de calcul.

Selon la présente invention, la fonction f est paramétrée de façon à assurer un mode de fonctionnement « tout-électrique » sur les tronçons où l'attribut « zéro-émission ZE » est égal à 1.

Pour cela, le calculateur du véhicule automobile met en oeuvre trois opérations distinctes.

Les deux premières opérations sont prévues pour affecter le fonctionnement de l'algorithme A* tandis que la troisième opération est prévue pour agir directement sur le moteur à combustion interne.

La première opération consiste, pour les tronçons $T_i$ où l'attribut « zéro-émission ZE » est égal à 1, à forcer l'utilisation des noeuds $n_{i,x}$ qui maximisent la décharge de la batterie de traction.

Pour cela, si le tronçon $T_i$ considéré à un attribut « zéro-émission ZE » égal à 1, l'algorithme A* est prévu pour ne pouvoir choisir qu'un seul noeud $n_{i+1,y}$ tel que :

$$SOE_y = SOE_x + \Delta SOE_{i,min}$$

où $\Delta SOE_{i,min}$ représente la consommation électrique en mode « tout-électrique » du véhicule sur le tronçon $T_i$ (entre les noeuds $n_{i,x}$ et $n_{i+1,y}$).

La seconde opération consiste à appliquer des pénalités dans le calcul de la fonction heuristique h à toutes les trajectoires qui provoqueraient une consommation de carburant sur le tronçon $T_i$, de façon à rendre cette trajectoire moins intéressante du point de vue de l'algorithme.

Cette seconde opération permet ainsi d'améliorer la rapidité de convergence de l'algorithme A*.

La pénalité est ici modélisée par le coefficient multiplicateur $\alpha_i^{ZE}$ précité.

Ce coefficient multiplicateur est pour cela choisi tel que :

$\alpha_i^{ZE}$ = 1 sur les tronçons pour lesquels l'attribut « zéro-émission ZE » est égal à 0,

$\alpha_i^{ZE}$ = A > 1 sur les tronçons pour lesquels l'attribut « zéro-émission ZE » est égal à 1, A étant une constante prédéterminée.

On notera ici que cette seconde opération est avantageuse à mettre en oeuvre, mais qu'elle n'est pas absolument nécessaire pour assurer au véhicule de rouler en mode tout-électrique sur les tronçons pour lesquels l'attribut « zéro-émission ZE » est égal à 1.

Une fois le chemin optimal trouvé (passant par les points optimaux des courbes de référence CE$_j$), le calculateur élabore une consigne de gestion énergétique en fonction des coordonnées des points optimaux P$_i$.

Cette consigne de gestion énergétique est alors utilisée au cours du trajet par le calculateur afin de faire du suivi de trajectoire, de manière que l'état d'énergie SOE de la batterie de traction suive le chemin CI illustré sur la figure 8.

Plusieurs procédés permettent de réaliser un tel suivi. Un exemple est notamment bien illustré dans la demande de brevet FR2988674 déposée par la demanderesse, ou encore dans les documents WO2013150206 et WO2014001707.

La troisième opération consiste à élaborer la consigne de gestion énergétique de façon à ce qu'elle comporte un signal d'inhibition du démarrage du moteur à combustion interne sur les tronçons pour lesquels les attributs « zéro-émission ZE » sont égaux à 1.

Le signal d'inhibition est alors transmis au calculateur qui empêche donc tout démarrage du moteur à combustion interne sur ces tronçons.

A ce stade, on pourra noter qu'il est possible qu'aucune consigne de gestion énergétique ne puisse être trouvée de façon à assurer la traversée des tronçons dans lesquels l'utilisation du moteur à combustion interne n'est pas autorisée, soit car la batterie de traction ne pourra pas être suffisamment chargée à l'arrivée sur ces tronçons, soit que la zone zéro-émission traversée est trop grande compte tenu de l'autonomie du véhicule hybride en mode « tout-électrique ».

Dans cette éventualité, le calculateur sera prévu pour alerter le conducteur, par exemple vis un écran situé dans la console centrale du véhicule, que cette traversée sera impossible. Le calculateur pourra alors proposer un autre trajet ne présentant pas ce problème.

**Revendications**

1. Procédé de calcul d'une consigne de gestion de la consommation en carburant et en courant électrique d'un véhicule automobile hybride comportant au moins un moteur électrique alimenté en courant électrique par une batterie de traction, et un moteur à combustion interne alimenté en carburant,

comprenant des étapes de :

a) acquisition, au moyen d'un système de navigation, d'un trajet à effectuer,
b) division dudit trajet en tronçons (T$_i$, i∈{1...N}) successifs,
c) acquisition, pour chaque tronçon (T$_i$), d'attributs (FC, SC, SL, TS, RG, LL NL, SMS, ZE) caractérisant ledit tronçon (T$_i$),
d) pour chacun desdits tronçons (T$_i$) et compte tenu de ses attributs (FC, SC, SL, TS, RG, LL NL, SMS), acquisition d'une relation (CE$_j$) reliant la consommation en carburant (CC) du véhicule automobile hybride sur le tronçon (T$_i$) à sa consommation d'énergie électrique (ΔSOE),
e) détermination d'un point optimal de consommation (P$_i$) dans chacune des relations (CE$_j$) acquises, et
f) élaboration d'une consigne de gestion énergétique tout le long du trajet, en fonction des coordonnées desdits points optimaux (P$_i$),

en ce que, à l'étape c), un premier desdits attributs (ZE) acquis est relatif au caractère autorisé ou non d'utiliser le moteur à combustion interne sur ledit tronçon (T$_i$), et
en ce que, à l'étape e), il est prévu de déterminer les points optimaux de consommation (P$_i$) de manière à :

- maximiser la décharge de la batterie de traction sur les tronçons (T$_i$) pour lesquels le premier attribut (ZE) indique qu'il n'est pas autorisé d'utiliser le moteur à combustion interne,
- minimiser la consommation en carburant du véhicule automobile hybride sur l'ensemble du trajet, et
- maximiser la décharge de la batterie de traction à l'issue dudit trajet,

le procédé étant **caractérisé en ce que**, à l'étape e), il est prévu de déterminer les points optimaux de consommation (P$_i$) en pénalisant les points des relation (CE$_j$) qui correspondent à une consommation non nulle de carburant sur les tronçons (T$_i$) pour lesquels le premier attribut (ZE) indique qu'il n'est pas autorisé d'utiliser le moteur à combustion interne, la détermination des points optimaux de consommation (P$_i$) étant effectuée au moyen d'un algorithme d'optimisation heuristique (A*) consistant à minimiser une fonction (f) qui est la somme d'une fonction de coût (g) pour parvenir au tronçon (T$_i$) considéré et d'une fonction heuristique (h) évaluant le coût restant pour aller du tronçon (T$_i$) considéré jusqu'à la fin du trajet, pour pénaliser les points des relations (CE$_j$) qui correspondent à une consommation non nulle de carburant sur les tronçons (T$_i$) pour lesquels le

premier attribut (ZE) indique qu'il n'est pas autorisé d'utiliser le moteur à combustion interne, le calcul de la fonction heuristique (h) est réalisé de façon différente sur les tronçons ($T_i$) pour lesquels le premier attribut (ZE) indique qu'il n'est pas autorisé d'utiliser le moteur à combustion interne et sur les autres tronçons ($T_i$).

2. Procédé de calcul selon la revendication précédente, dans lequel, à l'étape f), la consigne de gestion énergétique comporte une commande d'inhibition du démarrage du moteur à combustion interne sur les tronçons ($T_i$) pour lesquels le premier attribut (ZE) indique qu'il n'est pas autorisé d'utiliser le moteur à combustion interne.

3. Procédé de calcul selon la revendication 1, dans lequel le calcul de la fonction heuristique (h) est réalisé en utilisant une expression mathématique à laquelle est appliqué un coefficient multiplicateur qui est strictement supérieur à 1 sur les tronçons ($T_i$) pour lesquels le premier attribut (ZE) indique qu'il n'est pas autorisé d'utiliser le moteur à combustion interne et qui est égale à 1 sur les autres tronçons ($T_i$).

4. Procédé de calcul selon l'une des revendications précédentes, dans lequel, à l'étape d), chaque relation ($CE_j$) est acquise en sélectionnant, parmi une pluralité de relations prédéterminées ($CE_j$, $j \in \{1...M\}$) reliant des valeurs de consommation en carburant (CC) à des valeurs de consommation d'énergie électrique ($\Delta$SOE), la relation prédéterminée ($CE_j$) qui est la meilleure approximation de la relation reliant la consommation en carburant (CC) du véhicule automobile hybride sur le tronçon ($T_i$) à sa consommation d'énergie électrique ($\Delta$SOE) compte tenu des attributs (FC, SC, SL, TS, RG, LL NL, SMS, ZE) caractérisant ledit tronçon ($T_i$).

5. Procédé de calcul selon la revendication précédente, dans lequel les relations prédéterminées ($CE_j$) sont des courbes ou des cartographies reliant des valeurs de consommation de carburant (CC) du moteur à combustion interne à des valeurs de charge ou de décharge ($\Delta$SOE) de la batterie de traction.

6. Procédé de calcul selon l'une des deux revendications précédentes, dans lequel, une mémoire mémorisant les relations prédéterminées ($CE_j$) ainsi qu'un tableau (TAB) associant à chaque valeur d'attribut (FC, SC, SL, TS, RG, LL NL, SMS) une probabilité que le tronçon (Ti) soit associée à l'une ou l'autre des relations ($CE_j$) prédéterminées, à l'étape d), il est prévu pour chaque tronçon (Ti) :

   - de déterminer grâce audit tableau (TAB), compte tenu des valeurs des attributs (FC, SC, SL, TS, RG, LL NL, SMS) associés à ce tronçon (Ti), la somme des probabilités que le tronçon (Ti) appartienne à l'une ou l'autre des relations ($CE_j$) prédéterminées, et
   - de sélectionner la relation ($CE_j$) présentant la somme de probabilité la plus élevée.

7. Procédé de calcul selon l'une des revendications précédentes, dans lequel, à l'étape b), chaque tronçon ($T_i$) est défini comme étant une portion de longueur maximale du trajet qui comporte au moins deux attributs (RG, SC, FC, ZE) invariables sur toute sa longueur, l'un des deux attributs étant formé par le premier attribut (ZE).

**Patentansprüche**

1. Verfahren zur Berechnung eines Sollwertes zur Verwaltung des Kraftstoff- und Stromverbrauchs eines Hybridkraftfahrzeugs, das mindestens einen Elektromotor, der durch eine Traktionsbatterie mit elektrischem Strom versorgt wird, und einen Verbrennungsmotor, der mit Kraftstoff versorgt wird, aufweist,

   die Schritte umfassend:

   a) des Erfassens einer zurückzulegenden Fahrstrecke mittels eines Navigationssystems,
   b) des Aufteilens der Fahrstrecke in aufeinanderfolgende Teilabschnitte ($T_i$, $i \in \{1...N\}$),
   c) des Erfassens von Attributen (FC, SC, SL, TS, RG, LL NL, SMS, ZE) für jeden Teilabschnitt ($T_i$), die den Teilabschnitt ($T_i$) kennzeichnen,
   d) des Erfassens, für jeden der Teilabschnitte ($T_i$) und unter Berücksichtigung seiner Attribute (FC, SC, SL, TS, RG, LL NL, SMS), einer Beziehung ($CE_j$), die den Kraftstoffverbrauch (CC) des Hybridkraftfahrzeugs auf dem Teilabschnitt ($T_i$) mit seinem Elektroenergieverbrauch ($\Delta$SOE) verbindet,
   e) des Bestimmens eines optimalen Verbrauchspunktes ($P_i$) in jeder der erfassten Beziehungen ($CE_j$), und
   f) des Erstellens eines Sollwertes zur Verwaltung des Stromverbrauchs entlang der gesamten Fahrstrecke in Abhängigkeit von den Koordinaten der optimalen Punkte ($P_i$),

wobei in Schritt c) ein erstes der erfassten Attribute (ZE) die vorliegende oder nicht vorliegende Erlaubnis betrifft, den Verbrennungsmotor auf dem Teilabschnitt ($T_i$) zu verwenden, und

wobei in Schritt e) vorgesehen ist, die optimalen Verbrauchspunkte ($P_i$) zu bestimmen, um so

- die Entladung der Traktionsbatterie auf den Teilabschnitten ($T_i$) zu maximieren, für die das erste Attribut (ZE) angibt, dass es nicht erlaubt ist, den Verbrennungsmotor zu verwenden,
- den Kraftstoffverbrauch das Hybridkraftfahrzeugs auf der Gesamtheit der Fahrstrecke zu minimieren, und
- die Entladung der Traktionsbatterie am Ende der Fahrstrecke zu maximieren,

wobei das Verfahren **dadurch gekennzeichnet ist, dass** in Schritt e) vorgesehen ist, die optimalen Verbrauchspunkte ($P_i$) zu bestimmen, indem die Punkte der Beziehungen ($CE_j$) bestraft werden, die einem von null verschiedenen Kraftstoffverbrauch auf den Teilabschnitten ($T_i$) entsprechen, für die das erste Attribut (ZE) angibt, dass es nicht erlaubt ist, den Verbrennungsmotor zu verwenden, wobei die Bestimmung der optimalen Verbrauchspunkte ($P_i$) mittels eines heuristischen Optimierungsalgorithmus ($A^*$) durchgeführt wird, der darin besteht, eine Funktion (f) zu minimieren, welche die Summe einer Kostenfunktion (g), um zu dem betrachteten Teilabschnitt ($T_i$) zu gelangen, und einer heuristischen Funktion (h) ist, welche die verbleibenden Kosten abschätzt, um vom betrachteten Teilabschnitt ($T_i$) bis zum Ende der Fahrstrecke zu fahren, um die Punkte der Beziehungen ($CE_j$) zu bestrafen, die einem von null verschiedenen Kraftstoffverbrauch auf den Teilabschnitten ($T_i$) entsprechen, für die das erste Attribut (ZE) angibt, dass es nicht erlaubt ist, den Verbrennungsmotor zu verwenden, wobei die Berechnung der heuristischen Funktion (h) auf den Teilabschnitten ($T_i$), für die das erste Attribut (ZE) angibt, dass es nicht erlaubt ist, den Verbrennungsmotor zu verwenden, und auf den anderen Teilabschnitten ($T_i$) auf unterschiedliche Weise durchgeführt wird.

2. Verfahren zur Berechnung nach dem vorhergehenden Anspruch, wobei in Schritt f) der Sollwert zur Verwaltung des Stromverbrauchs einen Befehl zum Blockieren des Startens des Verbrennungsmotors auf den Teilabschnitten ($T_i$) umfasst, für die das erste Attribut (ZE) angibt, dass es nicht erlaubt ist, den Verbrennungsmotor zu verwenden.

3. Verfahren zur Berechnung nach Anspruch 1, wobei die Berechnung der heuristischen Funktion (h) durchgeführt wird, indem ein mathematischer Ausdruck verwendet wird, in dem ein Multiplikationsfaktor verwendet wird, der auf den Teilabschnitten ($T_i$), für die das erste Attribut (ZE) angibt, dass es nicht erlaubt ist, den Verbrennungsmotor zu verwenden, streng größer als 1 ist und der auf den anderen Teilabschnitten ($T_i$) gleich 1 ist.

4. Verfahren zur Berechnung nach einem der vorhergehenden Ansprüche, wobei in Schritt d) jede Beziehung ($CE_j$) erfasst wird, indem aus mehreren vorbestimmten Beziehungen ($CE_j$, $j \in \{1...M\}$), die Werte des Kraftstoffverbrauchs (CC) mit Werten des Elektroenergieverbrauchs ($\Delta SOE$) verbinden, die vorbestimmte Beziehung ($CE_j$) ausgewählt wird, welche die beste Approximation der Beziehung ist, die den Kraftstoffverbrauch (CC) des Hybridkraftfahrzeugs auf dem Teilabschnitt ($T_i$) unter Berücksichtigung der den Teilabschnitt ($T_i$) kennzeichnenden Attribute (FC, SC, SL, TS, RG, LL NL, SMS, ZE) mit seinem Elektroenergieverbrauch ($\Delta SOE$) verbindet.

5. Verfahren zur Berechnung nach dem vorhergehenden Anspruch, wobei die vorbestimmten Beziehungen ($CE_j$) Kurven oder Kennfelder sind, die Werte des Kraftstoffverbrauchs (CC) des Verbrennungsmotors mit Werten der Ladung oder der Entladung ($\Delta SOE$) der Traktionsbatterie verbinden.

6. Verfahren zur Berechnung nach einem der beiden vorhergehenden Ansprüche, wobei, wenn ein Speicher die vorbestimmten Beziehungen ($CE_j$) sowie eine Tabelle (TAB) abspeichert, die jedem Attributwert (FC, SC, SL, TS, RG, LL NL, SMS) eine Wahrscheinlichkeit zuordnet, dass der Teilabschnitt (Ti) der einen oder anderen der vorbestimmten Beziehungen (CEj) zugeordnet wird, in Schritt d) für jeden Teilabschnitt (Ti) vorgesehen ist:

- mithilfe der Tabelle (TAB) unter Berücksichtigung der Werte der Attribute (FC, SC, SL, TS, RG, LL NL, SMS), die diesem Teilabschnitt (Ti) zugeordnet sind, die Summe der Wahrscheinlichkeiten zu bestimmen, dass der Teilabschnitt (Ti) zu der einen oder der anderen der vorbestimmten Beziehungen (CEj) gehört, und
- die Beziehung ($CE_j$) auszuwählen, welche die höchste Summe der Wahrscheinlichkeiten aufweist.

7. Verfahren zur Berechnung nach einem der vorhergehenden Ansprüche, wobei in Schritt b) jeder Teilabschnitt ($T_i$) als ein Abschnitt von maximaler Länge der Fahrstrecke definiert wird, der mindestens zwei Attribute (RG, SC, FC, ZE) aufweist, die auf seiner gesamten Länge unveränderlich sind, wobei eines der zwei Attribute von dem ersten Attribut (ZE) gebildet wird.

**Claims**

1. Method for computing a management setting regarding consumption of fuel and electric current by a hybrid motor vehicle comprising at least one electric motor supplied with electric current by a traction battery, and an internal combustion engine supplied with fuel, comprising steps of:

   a) acquiring, by means of a navigation system, a route to be taken,
   b) dividing said route into successive sections ($T_i$, $i \in \{1...N\}$),
   c) acquiring, for each section ($T_i$), attributes (FC, SC, SL, TS, RG, LL, NL, SMS, ZE) characterizing said section ($T_i$),
   d) for each of said sections ($T_i$) and taking into account its attributes (FC, SC, SL, TS, RG, LL, NL, SMS), acquiring a relationship ($CE_j$) between the fuel consumption (CC) of the hybrid motor vehicle on the section ($T_i$) and its consumption of electric energy ($\Delta$SOE),
   e) determining an optimal consumption point ($P_i$) in each of the acquired relationships ($CE_j$), and
   f) generating an energy management setting along the route, depending on the coordinates of said optimal points ($P_i$),
   in step c), a first of said acquired attributes (ZE) relates to whether or not it is permitted to use the internal combustion engine on said section ($T_i$), and
   in step e), provision is made to determine the optimal consumption points ($P_i$) in such a way as to:

   - maximize the discharge of the traction battery on sections ($T_i$) for which the first attribute (ZE) indicates that it is not permitted to use the internal combustion engine,
   - minimize the fuel consumption of the hybrid motor vehicle over the route in its entirety, and
   - maximize the discharge of the traction battery by the end of the route,

   the method being **characterized in that**, in step e), provision is made to determine the optimal consumption points ($P_i$) by penalizing points of the relationships ($CE_j$) that correspond to a non-zero fuel consumption on the sections ($T_i$) for which the first attribute (ZE) indicates that it is not permitted to use the internal combustion engine, the optimal consumption points ($P_i$) being determined by means of a heuristic optimization algorithm (A*) consisting in minimizing a function (f) that is the sum of a cost function (g) expressing the cost of reaching the section ($T_i$) in question and of a heuristic function (h) expressing the remaining cost of getting from the section ($T_i$) in question to the end of the route, so as to penalize the points of the relationships ($CE_j$) that correspond to a non-zero fuel consumption on the sections ($T_i$) for which the first attribute (ZE) indicates that it is not permitted to use the internal combustion engine, the heuristic function (h) being computed differently on sections ($T_i$) for which the first attribute (ZE) indicates that it is not permitted to use the internal combustion engine than on the other sections ($T_i$).

2. Computing method according to the preceding claim, wherein, in step f), the energy management setting comprises a command to inhibit start-up of the internal combustion engine on the sections ($T_i$) for which the first attribute (ZE) indicates that it is not permitted to use the internal combustion engine.

3. Computing method according to Claim 1, wherein the heuristic function (h) is computed using a mathematical expression to which is applied a multiplier coefficient that is strictly greater than 1 on the sections ($T_i$) for which the first attribute (ZE) indicates that it is not permitted to use the internal combustion engine and that is equal to 1 on the other sections ($T_i$).

4. Computing method according to one of the preceding claims, wherein, in step d), each relationship ($CE_j$) is acquired by selecting, from a plurality of predetermined relationships ($CE_j$, $j \in \{1...M\}$) between values of fuel consumption (CC) and values of consumption of electric energy ($\Delta$SOE), the predetermined relationship ($CE_j$) that is the best approximation of the relationship between the fuel consumption (CC) of the hybrid motor vehicle on the section ($T_i$) and its consumption of electric energy ($\Delta$SOE) taking into account the attributes (FC, SC, SL, TS, RG, LL, NL, SMS, ZE) characterizing said section ($T_i$).

5. Computing method according to the preceding claim, wherein the predetermined relationships ($CE_j$) are curves or maps relating values of the fuel consumption (CC) of the internal combustion engine to values of the level of charge or discharge ($\Delta$SOE) of the traction battery.

6. Computing method according to either of the two preceding claims, wherein a memory storing the predetermined

relationships ($CE_j$) and a table (TAB) associating, with a value of each attribute (FC, SC, SL, TS, RG, LL, NL, SMS), a probability that the section ($T_i$) is associated with one or other of the predetermined relationships ($CE_j$), in step d), provision is made, for each section ($T_i$):

- to determine, by means of said table (TAB), taking into account the values of the attributes (FC, SC, SL, TS, RG, LL, NL, SMS) associated with this section ($T_i$), the sum of the probabilities that the section ($T_i$) belongs to one or other of the predetermined relationships ($CE_j$), and
- to select the relationship ($CE_j$) having the highest probability sum.

7. Computing method according to one of the preceding claims, wherein, in step b), each section ($T_i$) is defined as being a segment of maximum length of the route that has at least two attributes (RG, SC, FC, ZE) that are invariable over its entire length, one of the two attributes being formed by the first attribute (ZE).

# Fig.1

| T1 | | T2 | | T3 | | | TN | |
|---|---|---|---|---|---|---|---|---|
| Attribut | Valeur | Attribut | Valeur | Attribut | Valeur | ... | Attribut | Valeur |
| FC | 2 | FC | 3 | FC | 6 | | FC | 1 |
| SC | 5 | SC | 4 | SC | 1 | | SC | 6 |
| SL | 70 km/h | SL | 60 km/h | SL | 130 km/h | | SL | 30 km/h |
| TS | 43 km/h | TS | 74 km/h | TS | 97 km/h | | TS | 35 km/h |
| RG | 3% | RG | -5% | RG | 0% | | RG | 0% |
| LL | 12km | LL | 8km | LL | 29km | | LL | 1km |

# Fig.2

| T1 | T2 | T3 | | TN |
|---|---|---|---|---|
| | | | ... | |
| | | | | |
| $\psi_{2,1}$ | $\psi_{2,2}$ | $\psi_{2,3}$ | | $\psi_{2,N}$ |
| $\psi_{1,1}$ | $\psi_{1,2}$ | $\psi_{1,3}$ | | $\psi_{1,N}$ |
| $\psi_{0,1}$ | $\psi_{0,2}$ | $\psi_{0,3}$ | | $\psi_{0,N}$ |
| $\Delta SoEmin_1$ | $\Delta SoEmin_2$ | $\Delta SoEmin_3$ | | $\Delta SoEmin_N$ |
| $\Delta SoEmax_1$ | $\Delta SoEmax_2$ | $\Delta SoEmax_3$ | | $\Delta SoEmax_N$ |
| $RG_1$ | $RG_2$ | $RG_3$ | | $RG_N$ |
| $LL_1$ | $LL_2$ | $LL_3$ | | $LL_N$ |

Fig.3

Fig.4

Fig.5

| CE$_i$ Attributs | | CE$_1$ | CE$_2$ | CE$_3$ | CE$_4$ | ... | CE$_{11}$ |
|---|---|---|---|---|---|---|---|
| nom | valeur | | | | | | |
| FC | 1 | | | | | | |
| | 2 | $a_1$ | $a_2$ | $a_3$ | $a_4$ | ... | $a_{11}$ |
| | ... | | | | | | |
| | 6 | | | | | | |
| SC | 1 | | | | | | |
| | 2 | | | | | | |
| | ... | | | | | | |
| | 6 | $b_1$ | $b_2$ | $b_3$ | $b_4$ | ... | $b_{11}$ |
| SL | 30 | $c_1$ | $c_2$ | $c_3$ | $c_4$ | ... | $c_{11}$ |
| | ... | | | | | | |
| | 130 | | | | | | |
| NL | 1 | | | | | | |
| | 2 | $d_1$ | $d_2$ | $d_3$ | $d_4$ | ... | $d_{11}$ |
| | ≥3 | | | | | | |
| SMS | <20 | | | | | | |
| | 20-40 | | | | | | |
| | 40-60 | | | | | | |
| | 60-80 | $e_1$ | $e_2$ | $e_3$ | $e_4$ | ... | $e_{11}$ |
| | 80-100 | | | | | | |
| | >100 | | | | | | |
| TS | <20 | | | | | | |
| | 20-40 | | | | | | |
| | 40-60 | $f_1$ | $f_2$ | $f_3$ | $f_4$ | ... | $f_{11}$ |
| | 60-80 | | | | | | |
| | 80-100 | | | | | | |
| | >100 | | | | | | |

TAB

Fig.6

Fig.7

Fig.8

**EP 3 856 600 B1**

## RÉFÉRENCES CITÉES DANS LA DESCRIPTION

**Documents brevets cités dans la description**

- US 9108503 B
- EP 2857271 A2
- DE 102013225558 A1
- FR 3061470 A1
- FR 2988674
- WO 2013150206 A
- WO 2014001707 A